# EUROPEAN PATENT SPECIFICATION

(11) **EP 3 691 206 B1**
(45) Date of publication and mention of the grant of the patent: **04.05.2022**
(21) Application number: 18872571.7
(22) Date of filing: 31.10.2018
(51) Int. Cl.: H04W 40/24, H04L 12/725

(54) **POLICY UPDATE METHOD AND APPARATUS**
RICHTLINIENAKTUALISIERUNGSVERFAHREN UND -VORRICHTUNG
PROCÉDÉ ET DISPOSITIF DE MISE À JOUR DE POLITIQUE

(30) Priority: 03.11.2017 CN 201711067642
(43) Date of publication of application: 05.08.2020
(73) Proprietor: Huawei Technologies Co., Ltd., Longgang District Shenzhen, Guangdong 518129 (CN)
(72) Inventor: ZHU, Haoren, Shenzhen Guangdong 518129 (CN); LU, Wei, Shenzhen Guangdong 518129 (CN); ZHU, Hualin, Shenzhen Guangdong 518129 (CN)
(74) Representative: Thun, Clemens
(86) International application number: PCT/CN2018/112834
(87) International publication number: WO 2019/085918

(56) References cited:
- SAMSUNG: "TS 23.502 PCF initiated UE Policy Update Procedure", 3GPP DRAFT; S2-171943 TS23.502 P-CR TO PROPOSE PCF INITIATED UE POLICY UPDATE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS , vol. SA WG2, no. Busan, South Korea; 20170327 - 20170331 26 March 2017 (2017-03-26), XP051247680, Retrieved from the Internet: URL:http://www.3gpp.org/ftp/Meetings_3GPP_ SYNC/SA2/Docs/ [retrieved on 2017-03-26]
- MOTOROLA MOBILITY ET AL: "Application Function influence on slice selection", 3GPP DRAFT; S2-175862_4262_502_AF INFLUENCE_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Sophia Antipolis, France; 20170821 - 20170825 21 August 2017 (2017-08-21), XP051325708, Retrieved from the Internet: URL:http://www.3gpp.org/ftp/Meetings_3GPP_ SYNC/SA2/Docs/ [retrieved on 2017-08-21]
- SHARP: "Pseudo-CR on LADN info update using Generic UE configuration update procedure", 3GPP TSG-CT WG1 Meeting #106 , C1-173901, 22 October 2017 (2017-10-22), XP051337749, India
- HUAWEI et al: "TS 23.501: Unified Data Repository", 3GPP TSG SA WG2 Meeting #122, S2-175302, 9 July 2017 (2017-07-09), XP051310271, San Jose Del Cabo, Mexico
- LG ELECTRONICS: "TS 23.501: UE Route Selection Policies", SA WG2 Meeting #120, S2-172118, 26 March 2017 (2017-03-26), XP051247845, Busan, South Korea
- QUALCOMM Incorporated et al: "TS 23.501 - Additional concepts and corrections for support for connectivity to a local area network", SA WG2 Meeting #S2-120, S2-172618, 27 March 2017 (2017-03-27), XP051247228, Busan, South Korea

## Description

### TECHNICAL FIELD

Embodiments of this application relate to the communications field, and more specifically, to a policy update method and apparatus.

### BACKGROUND

In a 5th generation (5rd generation, 5G) communications network, a terminal device is allowed to access a local area data network (local area data network, LADN). The LADN is a dedicated data network in a local area. The network not only has a common data network name (data network name, DNN), but also has a particular service area (service area, SA). The terminal device can access the LADN only when the terminal device is in the SA of the LADN and meets an access condition.

S2-171943, SA WG2 Meeting #S2-120, 27 - 31 March 2017 refers to a PCF initiated UE policy update procedure.

Further, S2-175862, SA WG2 Meeting # 122 bis, 21 - 25 August 2017 refers to an application function influence on slice selection.

In the prior art, signaling overheads of a policy update method for an LADN are relatively large.

### SUMMARY

Embodiments of this application provide a policy update method and apparatus, to reduce signaling overheads of an LADN in a policy update process. This problem is solved by the subject matter of the independent claims. Further implementation forms are provided in the dependent claims. .

### BRIEF DESCRIPTION OF DRAWINGS

FIG. 1 is a schematic diagram of a communications system;
FIG. 2 is a schematic flowchart of a policy update method;
FIG. 3 is a schematic flowchart of a policy update method;
FIG. 4 is a schematic flowchart of a policy update method;
FIG. 5 is a schematic flowchart of a policy update method;
FIG. 6 is a schematic diagram of a policy update apparatus;

### DESCRIPTION

Embodiments of this application may be used for a long term evolution (long term evolution, LTE) network, a 5G or next generation network, a fixed network, a home eNodeB, a corporate network, a mobile network with non-3GPP (such as Wi-Fi) access, or the like. In this application, an example in which the method is applied to a 5G network is used for description.

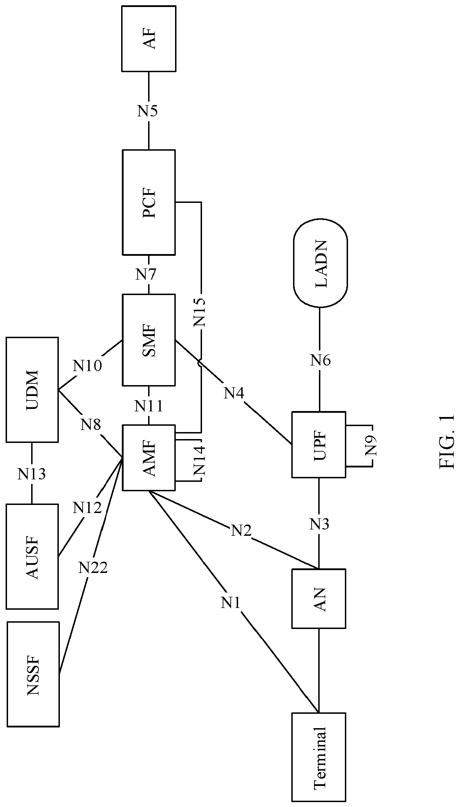

FIG. 1 is a schematic diagram of a communications system that can implement an embodiment of this application. In the communications system, a terminal device accesses a core network by using an access network (access network, AN) device.

The terminal device includes but is not limited to user equipment (user equipment, UE), a subscriber unit, a subscriber station, a mobile station, a mobile console, a remote station, a remote terminal device, a mobile terminal device, a user terminal device, a terminal device, a wireless communications device, a user agent, a user apparatus, a cellular phone, a cordless phone, a session initiation protocol (session initiation protocol, SIP) phone, a wireless local loop (WLL) station, personal digital processing (personal digital assistant, PDA), a handheld device with a wireless communication function, a computing device, a processing device connected to a wireless modem, a vehicle-mounted device, a wearable device, a terminal device in the internet of things, a home appliance, a virtual reality device, a terminal device in a future 5G network or a future evolved public land mobile network (public land mobile network, PLMN), and the like.

The access network device may be a device that communicates with the terminal device. The access network device may provide communication coverage for a particular geographical area, and may communicate with a terminal device located in the coverage area (cell). The access network device may communicate with any quantity of terminal devices. There may be a plurality of air interface connections between the access network device and the terminal device. For example, there are two air interface connections between the access network device and the terminal device, and the two air interface connections are respectively used to transmit a data stream A and a data stream B. The access network device may support communication protocols of different standards, or may support different communication modes. For example, the access network device may be an evolved NodeB (evolved node B, eNodeB), a wireless fidelity access point (wireless fidelity access point, WiFi AP), a worldwide interoperability for microwave access base station (worldwide interoperability for microwave access base station, WiMAX BS), or a radio controller in a cloud radio access network (cloud radio access network, CRAN), or the network device may be an access network device in a future 5G network or an access network device in a future evolved PLMN

The core network may include a user plane function (user plane function, UPF) network element, an access and mobility management function (access and mobility management function, AMF) network element, a session management function (session management function, SMF) network element, a policy control function (policy control function, PCF) network element, an application function (Application Function, AF) network element, a network slice selection function (network slice selection function, NSSF) network element, an authentication server function (authentication server function, AUSF) network element, and a unified data management (Unified Data Management, UDM) network element. User plane data transmission between a terminal device and an LADN may be implemented by using the access network device and the user plane function network element. In this embodiment, network elements may communicate with each other through interfaces shown in FIG. 1.

The PCF network element has a policy control decision function, and provides a policy for a network. The AMF network element is configured to perform mobility management, lawful interception, access authorization, authentication, and the like. The SMF network element is configured to implement session and bearer management, address allocation, and the like. The UDM network element is configured to store and manage subscription data of user equipment. In a possible implementation, the UDM network element may obtain policy information of the user equipment from a unified data repository (Unified Data Repository, UDR) network element.

It may be understood that in the communications system shown in FIG. 1, functions and interfaces of the network elements are merely examples. Not all functions are necessary when the network elements are applied to the embodiments of this application.

In the embodiments of this application, all or some network elements of the access network device and the core network may belong to a 3rd generation partnership project (3rd generation partnership project, 3GPP) network, or may belong to a non-3GPP network, for example, an intranet of an enterprise. All or some network elements of the core network may be physical entity network elements, or may be virtualized network elements. This is not limited herein.

The term "and/or" in the embodiments of this application describes only an association relationship for describing associated objects and represents that three relationships may exist. For example, A and/or B may represent the following cases: Only A exists, both A and B exist, and only B exists. In addition, in the descriptions of this application, "a plurality of" means two or more than two.

In the embodiments of this application, that a network element (for example, a network element A) obtains information from another network element (for example, a network element B) may mean that the network element A directly receives the information from the network element B, or may mean that the network element A receives the information from the network element B through another network element (for example, a network element C). When the network element A receives information from the network element B through the network element C, the network element C may transparently transmit the information, or may process the information, for example, add the information to different messages for transmission or filter the information, and send only filtered information to the network element A. Similarly, in various embodiments of this application, that the network element A sends information to the network element B may mean that the network element A directly sends the information to the network element B, or may mean that the network element A sends the information to the network element B through another network element (for example, the network element C).

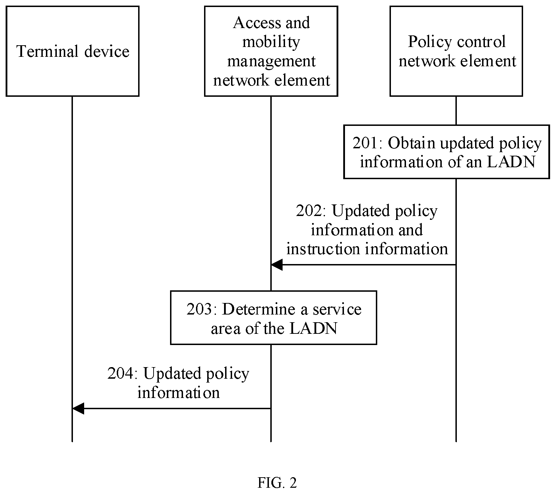

FIG. 2 is a schematic flowchart of a policy update method according to a first embodiment of this application. The policy update method includes the following steps.

Step 201: A policy control network element obtains updated policy information of an LADN.

In this embodiment of this application, the policy control network element may be a network element having a policy control function, for example, the PCF network element in FIG. 1.

In a possible implementation, the policy information may be a user equipment route selection policy (UE route selection policies, URSP). Different types of applications (APPs) may be deployed in different LADNs, and a terminal device may use different applications. In this case, a routing policy needs to be configured on the terminal device, to route data traffic of different applications to corresponding LADNs. The terminal device may implement the foregoing function by using the URSP, that is, the terminal device implements an application traffic routing function by configuring the URSP.

The policy information may include identification information of the LADN and identification information of an application deployed in the LADN. Specifically, the identification information of the LADN may be an identifier of the LADN, or may be a name of the LADN, for example, DNN1. The identification information of the application deployed in the LADN may be an identifier of the application supported by the LADN, for example, APP1 or APP2. Specifically, the policy information may be represented as: DNN1: APP1, APP2, ..., and APPX, where X indicates a quantity of applications deployed in the LADN.

The policy control network element receives the updated policy information of the LADN from a UDR network element, an AF network element, or a network exposure function (network exposure function, NEF) network element. In a possible implementation, the policy information of the LADN may be stored in the UDR network element. When the policy information changes, the UDR network element sends updated policy information to the policy control network element. For example, policy information DNN1: APP1, APP2, and APP3 of the LADN before an update is stored in the UDR network element. After the applications deployed in the LADN are changed to APP1, APP2, APP3, and APP4, the UDR network element sends policy information DNN1: APP 1, APP2, APP3, APP4 to the policy control network element, and updates the stored policy information to DNN1: APP1, APP2, APP3, and APP4. This manner may be understood as a policy information update triggered by an operator. In another possible implementation, when an application deployed in the LADN by an application provider changes, the application provider may send updated policy information of the LADN to the policy control network element by using the AF network element or the NEF network element. Specifically, the updated policy information of the LADN received by the policy control network element may be included in a notification message. The notification message may be a notification message in a service-oriented operation process, for example, an event notification message or a policy management update notification message. Optionally, the AF network element or the NEF network element may further instruct the UDR network element to update the stored policy information.

Step 202: The policy control network element sends the updated policy information and instruction information to an access and mobility management network element.

In this embodiment of this application, the access and mobility management network element may be a network element having an access management function, for example, the AMF network element in FIG. 1.

The instruction information is used to instruct the access and mobility management network element to regionally update the updated policy information. Optionally, the instruction information may be a regional update instruction. The instruction information may be implemented by using several bits. For example, when the instruction information is a particular value, the instruction information is used to instruct the access and mobility management network element to regionally update the updated policy information. Specifically, an area in which the policy information is updated refers to a service area of the LADN.

The updated policy information and the instruction information may be included in a notification message. The notification message may be a notification message in a service-oriented operation process, for example, a policy update notification message. Alternatively, the updated policy information and the instruction information may be separately sent in different messages. This is not limited herein.

Step 203: The access and mobility management network element determines the service area of the LADN.

Specifically, after receiving the updated policy information of the LADN and the instruction information from the policy control network element, the access and mobility management network element determines, according to the instruction information, that the policy information is regionally updated. Then, the access and mobility management network element determines the service area of the LADN corresponding to the updated policy information.

In a possible implementation, the service area of the LADN is stored in a UDM network element. In a registration process, the access and mobility management network element may obtain the LADN and the service area of the LADN. The access and mobility management network element may store a correspondence between the LADN and the service area of the LADN that are obtained in the registration process. After the access and mobility management network element receives the updated policy information of the LADN, the access and mobility management network element determines based on the correspondence, the service area of the LADN corresponding to the updated policy information. For example, the access and mobility management network element determines, based on the identification information of the LADN in the policy information and the correspondence, the service area of the LADN corresponding to the updated policy information.

Step 204: The access and mobility management network element sends the updated policy information to a terminal device in the service area of the LADN.

Specifically, the access and mobility management network element may send a policy update request message to the terminal device in the service area of the LADN. The request message includes the updated policy information.

In a possible implementation, before the access and mobility management network element sends the updated policy information to the terminal device, the access and mobility management network element may first determine a connection status of the terminal device. If the access and mobility management network element determines that the terminal device is in a connected state, the access and mobility management network element sends the updated policy information to the terminal device in the connected state. If the access and mobility management network element determines that the terminal device is in an idle state, the access and mobility management network element caches the updated policy information. When the terminal device is in the connected state, the access and mobility management network element sends the updated policy information to the terminal device.

In this embodiment of this application, the policy control network element sends the updated policy information and the instruction information to the access and mobility management network element. The access and mobility management network element performs a regional update by using the updated policy information according to the instruction information, thereby avoiding that the access and mobility management network element sends an updated policy to a terminal device that is not in the service area of the LADN, and reducing signaling overheads and air interface overheads. Especially in a scenario in which application information changes frequently or a scenario with access by a large quantity of internet of things terminal devices, an effect of reducing signaling overheads and air interface overheads by using the policy update method in this embodiment of this application is more evident.

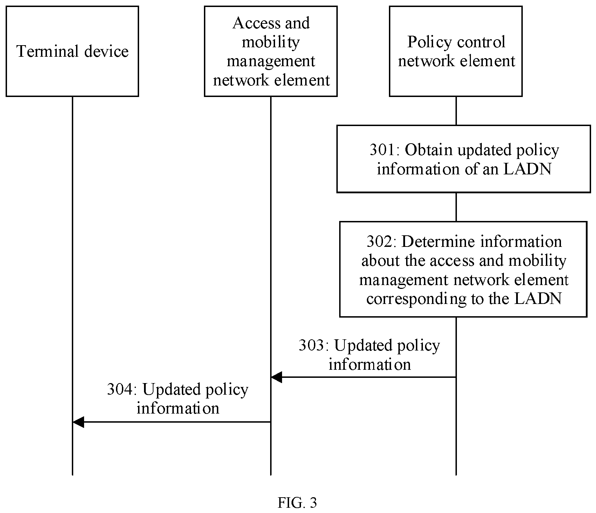

FIG. 3 is a schematic flowchart of a policy update method according to a second non-claimed embodiment of this application. The policy update method includes the following steps.

Step 301: A policy control network element obtains updated policy information of an LADN.

For details of this step, refer to the description of step 201.

Step 302: The policy control network element determines information about an access and mobility management network element corresponding to the LADN.

In this embodiment of this application, the LADN and the access and mobility management network element have the following correspondence: The access and mobility management network element manages a service area of the LADN. The information about the access and mobility management network element may be identification information of the access and mobility management network element. The service area of the LADN is stored in a UDM network element.

In a possible implementation, the policy control network element sends a request message to the UDM network element, to request the service area of the LADN. The policy control network element receives information that is about the service area of the LADN from the UDM network element. After obtaining the updated policy information of the LADN, the policy control network element may request the UDM network element to obtain the information about the service area of the LADN. Alternatively, the policy control network element may first request the UDM network element to obtain the information about the service area of the LADN, and then store the information about the service area of the LADN.

The policy control network element obtains, based on a network topology structure or configuration information, information about the access and mobility management network element corresponding to the updated policy information. Specifically, the policy control network element obtains, based on the network topology structure or the configuration information, the information about the access and mobility management network element that manages the service area of the LADN.

Step 303: The policy control network element sends the updated policy information to the access and mobility management network element determined in step 302.

In a possible implementation, the policy control network element receives subscription information from the access and mobility management network element. The subscription message is used to request the policy control network element to send the updated policy information to the access and mobility management network element when policy information of the LADN is updated. The policy control network element may send the updated policy information only to the access and mobility management network element that sends the subscription message. Optionally, the policy control network element may receive the subscription message in a service-oriented operation manner.

In another possible implementation, the policy control network element may alternatively not receive the subscription message, but configures content related to the subscription message in the policy control network element. The policy control network element sends the updated policy information to an access and mobility management network element that meets a configuration condition.

Step 304: The access and mobility management network element sends the updated policy information to a managed terminal device.

In a possible implementation, the access and mobility management network element may send the updated policy information to all terminal devices in a management range by using an access network device.

In a possible implementation, the access and mobility management network may alternatively first determine the service area of the LADN, and then send the updated policy information to a terminal device in the service area of the LADN. For details, refer to the descriptions of step 203 and step 204.

In this embodiment, the policy control network element determines the access and mobility management network element corresponding to the LADN, to update, at a granularity of the access and mobility management network element, the policy information of the LADN.

The methods in the first embodiment and the second non-claimed embodiment are improvements performed based on that the access and mobility management network element neither stores nor parses the policy information in the prior art. In another possible implementation, the access and mobility management network element may alternatively store policy information, and then compare the stored policy information with received policy information. If the policy information is updated, the updated policy information is sent to the terminal device in the service area of the LADN by using the method in step 203 and step 204.

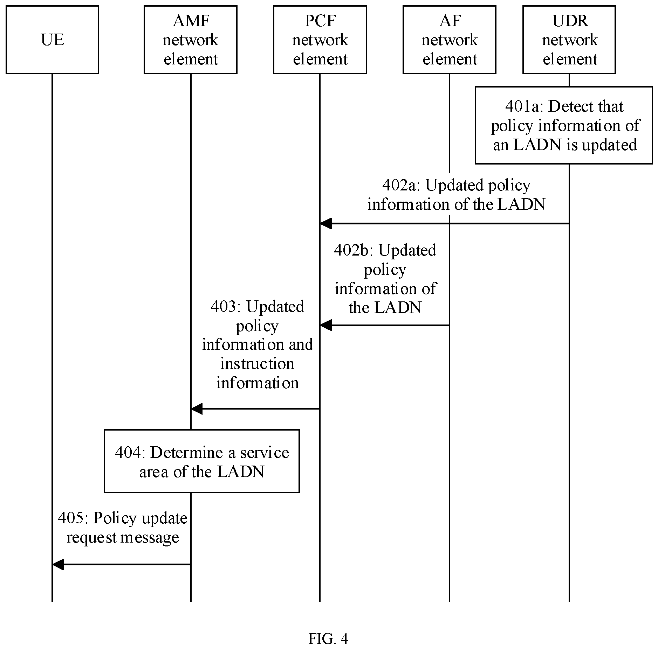

FIG. 4 is a schematic flowchart of a policy update method according to a third non-claimed embodiment of this application. This non-claimed embodiment is based on the first embodiment, and is described by using an example in which the terminal device is UE, the access and mobility management network element is an AMF network element, and the policy control network element is a PCF network element. The policy update method includes the following steps.

Step 401a: The UDR network element detects that the policy information of the LADN is updated.

Specifically, the policy information of the LADN may be stored in the UDR network element. When the stored policy information of the LADN changes, the UDR network element detects that the policy information of the LADN is updated. For this step, refer to the detailed description of step 201.

Step 402a: The PCF network element receives the updated policy information of the LADN from the UDR network element.

Specifically, the PCF network element receives a notification message from the UDR network element. The notification message includes the updated policy information of the LADN. The notification message may be an Nudm_PolicyManagement_Update message in a service-oriented operation. For this step, refer to the detailed description of step 201.

Step 402b: The AF network element sends the updated policy information of the LADN to the PCF network element.

Specifically, when the application deployed in the LADN by the application provider changes, the application provider may send the updated policy information to the PCF network element by using the AF network element. Alternatively, the application provider may send the updated policy information to the PCF network element by using the NEF network element. The updated policy information may be included in a notification message. The notification message may be an Npcf_PolicyAuthorization_Update Service Operation message in the service-oriented operation. For this step, refer to the detailed description of step 201.

In this embodiment of this application, the method in step 401a and step 402a and the method in step 402b are optional solutions, provided that the PCF network element learns that the policy information of the LADN is updated.

Step 403: The PCF network element sends the updated policy information and the instruction information to the AMF network element.

The PCF network element sends a notification message to the AMF network element. The notification message includes the updated policy information and the instruction information. The notification message may be an Npcf_AMPolicyControl_UpdateNotify message in the service-oriented operation. For this step, refer to the detailed description of step 202.

Step 404: The AMF network element determines the service area of the LADN.

For this step, refer to the detailed description of step 203.

Step 405: The AMF network element sends a policy update request message to the UE in the service area of the LADN.

The request message includes the updated policy information. For this step, refer to the detailed description of step 204.

The AMF network element may further receive a policy update response message from the UE.

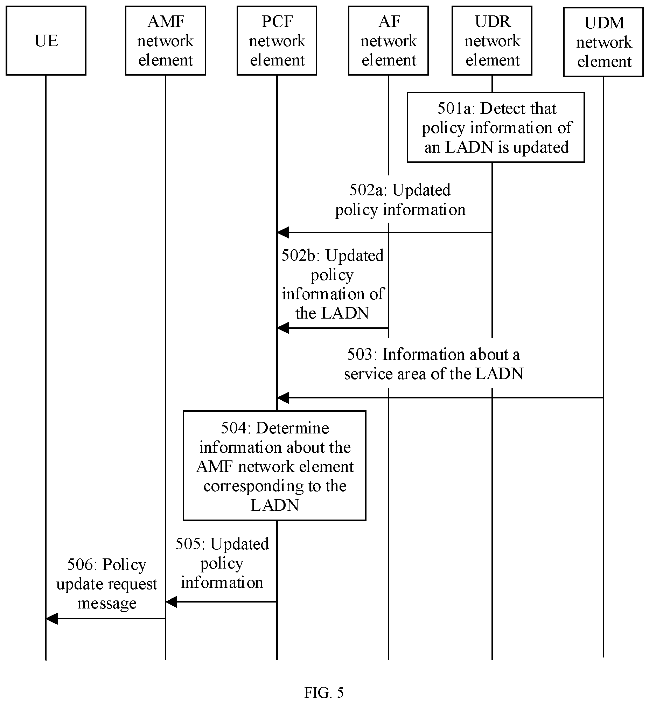

FIG. 5 is a schematic flowchart of a policy update method according to a fourth non-claimed embodiment of this application. This embodiment is based on the second embodiment, and is described by using an example in which the terminal device is UE, the access and mobility management network element is an AMF network element, and the policy control network element is a PCF network element. The policy update method includes the following steps.

Step 501a: A UDR network element detects that the policy information of the LADN is updated.

For this step, refer to the detailed description of step 401a.

Step 502a: The PCF network element receives the updated policy information of the LADN from the UDR network element.

For this step, refer to the detailed description of step 402a.

Step 502b: The AF network element sends the updated policy information of the LADN to the PCF network element.

For this step, refer to the detailed description of step 402b.

Step 503: The PCF network element obtains the information about the service area of the LADN from the UDM network element.

Specifically, the service area of the LADN is stored in the UDM network element. In a possible implementation, the PCF network element sends a request message to the UDM network element, to request the service area of the LADN. The PCF network element receives the information that is about the service area of the LADN from the UDM network element. After obtaining the updated policy information of the LADN, the PCF network element may request the UDM network element to obtain the information about the service area of the LADN. Alternatively, the PCF network element may first request the UDM network element to obtain the information about the service area of the LADN, and then store the information about the service area of the LADN.

Step 504: The PCF network element determines information about the AMF network element corresponding to the LADN.

For this step, refer to the detailed description of step 302.

Step 505: The PCF network element sends the updated policy information to the AMF network element determined in step 504.

Specifically, the PCF network element sends the notification message to the AMF. The notification message includes the updated policy information. The notification message may be an Npcf_AMPolicyControl_UpdateNotify message in a service-oriented operation.

For this step, refer to the detailed description of step 303.

Step 506: The AMF network element sends the updated policy information to the managed terminal device.

For this step, refer to the detailed description of step 405.

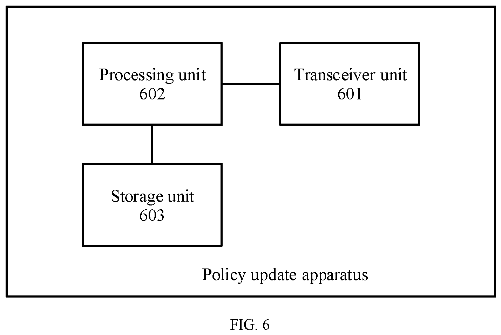

FIG. 6 is a schematic diagram of a policy update apparatus according to a non-claimed an embodiment of this application. The policy update apparatus includes a transceiver unit 601, a processing unit 602, and a storage unit 603. The transceiver unit 601, the processing unit 602, and the storage unit 603 may be physically separated units, or may be integrated into one or more physical units. This is not limited herein.

The transceiver unit 601 is configured to implement content exchange between the processing unit 602 and another unit or network element. Specifically, the transceiver unit 601 may be a communications interface of the policy update apparatus, or may be a transceiver circuit or a transceiver. The transceiver unit 601 may alternatively be a communications interface or a transceiver circuit of the processing unit 602. Optionally, the transceiver unit 601 may be a transceiver chip.

Although FIG. 6 shows only one transceiver unit 601, the policy update apparatus may alternatively include a plurality of transceiver units 601, or the transceiver unit 601 includes a plurality of transceiver sub-units. The transceiver unit 601 may further include a sending unit and a receiving unit.

The processing unit 602 is configured to implement data processing performed by the policy update apparatus. The processing unit 602 may be a processing circuit or may be a processor. The processor may be a central processing unit (central processing unit, CPU), a network processor (network processor, NP), or a combination of the CPU and the NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field-programmable gate array, FPGA), generic array logic (Generic Array Logic, GAL), or any combination thereof.

Although FIG. 6 shows only one processing unit 602, the policy update apparatus may alternatively include a plurality of processing units, or the processing unit 602 includes a plurality of data processing sub-units. Specifically, the processor may be a single-core (single-CPU) processor, or may be a multi-core (multi-CPU) processor.

The storage unit 603 is configured to store a computer instruction executed by the processing unit 602. The storage unit 603 may be a storage circuit or may be a memory. The memory may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache.

The storage unit 603 may be a unit independent of the processing unit 602, or may be a storage unit in the processing unit 602. This is not limited herein. Although FIG. 6 shows only one storage unit 603, the policy update apparatus may alternatively include a plurality of storage units 603, or the storage unit 603 includes a plurality of storage sub-units.

In embodiments of this application, the processing unit 602 may exchange content with another network element by using the transceiver unit 601. For example, the processing unit 602 obtains or receives content from the another network element. If the processing unit 602 and the transceiver unit 601 are two components that are physically separated, the processing unit 602 may perform content exchange with another unit inside the policy update apparatus without using the transceiver unit 601.

In a possible implementation, the transceiver unit 601, the processing unit 602, and the storage unit 603 may be connected to each other by using a bus. The bus may be a peripheral component interconnect (peripheral component interconnect, PCI) bus, an extended industry standard architecture (extended industry standard architecture, EISA) bus, and or the like. The bus may be classified into an address bus, a data bus, a control bus, and the like.

In this embodiment of this application, the processing unit 602 enables, according to a computer instruction stored in the storage unit 603, the policy update apparatus to implement the methods in the first embodiment to the fourth embodiment of this application.

Specifically, the policy update apparatus may be a policy control network element, for example, a PCF network element. The policy update apparatus may alternatively be an access and mobility management network element, for example, an AMF network element.

When the policy update apparatus is a policy control network element, in a possible implementation, the processing unit 602 is configured to obtain updated policy information of a local area data network LADN by using the transceiver unit 601. The processing unit 602 is further configured to send the updated policy information and instruction information to the access and mobility management network element by using the transceiver unit 601. The instruction information is used to instruct the access and mobility management network element to regionally update the updated policy information.

Optionally, the processing unit 602 is configured to receive, by using the transceiver unit 601, the updated policy information that is of the LADN from a unified data repository network element, an application function network element, or a network exposure function network element.

Optionally, an update area of the updated policy information is a service area of the LADN.

In this embodiment, the transceiver unit 601 is further configured to implement operations of content receiving and sending between the policy control network element and an external network element in the first embodiment and the third embodiment of this application. The processing unit 602 may implement, by using the transceiver unit 601, an operation of content receiving and sending between the processing unit 602 and an external network element.

In this embodiment, the processing unit 602 enables, according to the computer instruction stored in the storage unit 603, the policy control network element to implement an operation performed by the policy control network element in the first embodiment and the third embodiment of this application.

When the policy update apparatus is a policy control network element, in another possible implementation, the processing unit 602 is configured to obtain updated policy information of a local area data network LADN by using the transceiver unit 601. The processing unit 602 is further configured to determine information about an access and mobility management network element corresponding to the LADN. The processing unit 602 is further configured to send the updated policy information to the access and mobility management network element by using the transceiver unit 601.

Optionally, the processing unit 602 is further configured to receive, by using the transceiver unit 601, information that is about the service area of the LADN from a unified data management network element. The processing unit 602 is configured to determine information about the access and mobility management network element corresponding to the service area.

Optionally, the processing unit 602 is further configured to receive, by using the transceiver unit 601, subscription information from the access and mobility management network element. The processing unit 602 is configured to send the updated policy information to the access and mobility management network element based on the subscription information by using the transceiver unit 601.

Optionally, the processing unit 602 is configured to receive, by using the transceiver unit 601, the updated policy information that is of the LADN from a unified data repository network element, an application function network element, or a network exposure function network element.

In this embodiment, the transceiver unit 601 is further configured to implement operations of content receiving and sending between the policy control network element and an external network element in the second embodiment and the fourth embodiment of this application. The processing unit 602 is configured to implement a data or signaling processing operation of the policy control network element in the second embodiment and the fourth embodiment of this application.

In this embodiment, the processing unit 602 enables, according to the computer instruction stored in the storage unit 603, the policy control network element to implement an operation performed by the policy control network element in the second embodiment and the fourth embodiment of this application.

When the policy update apparatus is an access and mobility management network element, the processing unit 602 is configured to receive, by using the transceiver unit 601, updated policy information of a local area data network LADN and instruction information from a policy control network element. The instruction information is used to instruct to regionally update the updated policy information. The processing unit 602 is configured to send the updated policy information to a terminal device in a service area of the LADN according to the instruction information by using the transceiver unit 601.

In a possible implementation, the processing unit 602 is further configured to determine the service area of the LADN.

In a possible implementation, the apparatus further includes the storage unit 603. The processing unit 602 is further configured to determine that the terminal device is in an idle state. The storage unit 603 is configured to cache the updated policy information.

In a possible implementation, the processing unit 602 is further configured to determine that the terminal device is in a connected state. The processing unit 602 is configured to send the updated policy information to the terminal device in the connected state according to the instruction information by using the transceiver unit 601.

In this embodiment, the transceiver unit 601 is further configured to implement operations of content receiving and sending between the access and mobility management network element and an external network element in the first embodiment and the third embodiment of this application. The processing unit 602 is configured to implement a data or signaling processing operation of the access and mobility management network element in the first embodiment and the third embodiment of this application.

In this embodiment, the processing unit 602 enables, according to the computer instruction stored in the storage unit 603, the access and mobility management network element to implement an operation performed by the access and mobility management network element in the first embodiment and the third embodiment of this application.

In this embodiment, the updated policy information includes identification information of the LADN and identification information of an application deployed in the LADN. The policy information is a user equipment route selection policy.

In the embodiments of this application, for ease of understanding, a plurality of examples are used for description. However, these examples are merely examples, but this does not mean that these examples are optimal implementations for implementing this application.

In the embodiments of this application, for ease of description, a request message, a response message, and names of various other messages are used. However, these messages are merely used as examples to describe content that needs to be carried or an implemented function. Specific names of the messages constitute no limitation to this application. For example, the messages may be a first message, a second message, and a third message. These messages may be some specific messages, or may be some fields in the messages. These messages may alternatively represent various service operations.

All or some of the foregoing embodiments may be implemented by using software, hardware, firmware, or any combination thereof. When software is used to implement the embodiments, the embodiments may be implemented completely or partially in a form of a computer program product. The computer program product may include one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic disk), an optical medium (for example, a DVD), a semiconductor medium (for example, a solid-state drive (solid state disk, SSD)), or the like.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. This is not limited herein.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a removable hard disk, a read-only memory, a random access memory, a magnetic disk, or an optical disc.

The protection scope of this application shall be subject to the protection scope of the claims.

## Claims

1. A policy update method performed by an access and mobility management network element, the method comprising:
• receiving updated policy information of a local area data network, LADN, and instruction information from a policy control network element (202),
o wherein the updated policy information is an updated user equipment route selection policy and contains identification information of the LADN, and
o the instruction information is used to instruct the access and mobility management network element to update the updated policy information regionally with respect to a service area of the LADN;
• determining the service area of the LADN according to a correspondence between the service area of the LADN and the identification information of the LADN (203);
• determining whether a terminal device is within the service area of the LADN;
• in case the terminal device is within the service area, sending the updated policy information to the terminal device in the service area of the LADN according to the instruction information, thereby regionally updating the updated policy information (204).

2. The method according to claim 1, wherein before the sending the updated policy information to the terminal device, the method further comprises:
determining that the terminal device is in an idle state; and
caching the updated policy information without sending the updated policy information to the terminal device.

3. The method according to any one of claims 1 to 2, wherein the method further comprises:
determining that the terminal device is in a connected state; and
the sending the updated policy information to the terminal device in the service area of the LADN according to the instruction information comprises:
sending the updated policy information to the terminal device in the connected state according to the instruction information.

4. The method according to any one of claims 1 to 3, wherein the updated policy information further comprises identification information of an application deployed in the LADN.

5. An access and mobility management network element configured to perform any of the methods according to claims 1 to 4.

6. A computer readable storage medium, wherein the computer readable storage medium stores an instruction, and when the instruction runs on a computer of an access and mobility management network element, the computer is enabled to perform the method according to any one of claims 1 to 4.

## Patentansprüche

1. Richtlinien-Aktualisierungsverfahren, das von einem Zugangs- und Mobilitätsmanagement-Netzwerkelement durchgeführt wird, wobei das Verfahren Folgendes umfasst:
□ Empfangen aktualisierter Richtlinieninformationen eines lokalen Datennetzes, LADN, und Anweisungsinformationen von einem Richtlinien-Steuernetzwerkelement (202),
o wobei die aktualisierten Richtlinieninformationen eine aktualisierte Benutzergeräte-Routenauswahlrichtlinie sind und Identifikationsinformationen des LADN enthalten, und
o die Anweisungsinformationen verwendet werden, um das Zugangs- und Mobilitätsmanagement-Netzwerkelement anzuweisen, die aktualisierten Richtlinieninformationen in Bezug auf einen Dienstbereich des LADN regional zu aktualisieren;
□ Bestimmen des Dienstbereichs des LADN gemäß einer Entsprechung zwischen dem Dienstbereich des LADN und den Identifikationsinformationen des LADN (203);
□ Bestimmen, ob sich ein Endgerät innerhalb des Dienstbereichs des LADN befindet;
□ falls sich das Endgerät innerhalb des Dienstbereichs befindet, Senden der aktualisierten Richtlinieninformationen an das Endgerät im Dienstbereich des LADN gemäß den Anweisungsinformationen, wodurch die aktualisierten Richtlinieninformationen regional aktualisiert werden (204).

2. Verfahren nach Anspruch 1, wobei das Verfahren vor dem Senden der aktualisierten Richtlinieninformationen an das Endgerät ferner Folgendes umfasst:
Bestimmen, dass sich das Endgerät in einem Ruhezustand befindet; und
Zwischenspeichern der aktualisierten Richtlinieninformationen, ohne die aktualisierten Richtlinieninformationen an das Endgerät zu senden.

3. Verfahren nach einem der Ansprüche 1 bis 2, wobei das Verfahren ferner Folgendes umfasst:
Bestimmen, dass sich das Endgerät in einem verbundenen Zustand befindet; und
wobei das Senden der aktualisierten Richtlinieninformationen an das Endgerät im Dienstbereich des LADN gemäß den Anweisungsinformationen Folgendes umfasst:
Senden der aktualisierten Richtlinieninformationen an das Endgerät im verbundenen Zustand gemäß den Anweisungsinformationen.

4. Verfahren nach einem der Ansprüche 1 bis 3, wobei die aktualisierten Richtlinieninformationen ferner Identifikationsinformationen einer im LADN bereitgestellten Anwendung umfassen.

5. Zugangs- und Mobilitätsmanagement-Netzwerkelement, das konfiguriert ist, um eines der Verfahren nach den Ansprüchen 1 bis 4 durchzuführen.

6. Computerlesbares Speichermedium, wobei das computerlesbare Speichermedium eine Anweisung speichert und bei Ausführung der Anweisung auf einem Computer eines Zugangs- und Mobilitätsmanagement-Netzwerkelements dem Computer ermöglicht wird, das Verfahren nach einem der Ansprüche 1 bis 4 durchzuführen.

## Revendications

1. Procédé de mise à jour de politique exécuté par un élément de réseau de gestion d'accès et de mobilité, le procédé comprenant :
□ la réception d'informations de politique mises à jour d'un réseau de données local, LADN, et d'informations d'instruction d'un élément de réseau de commande de politique (202),
∘ dans lequel les informations de politique mises à jour sont une politique de sélection d'itinéraire d'équipement utilisateur mise à jour et contiennent des informations d'identification du LADN, et
∘ les informations d'instruction sont utilisées pour ordonner à l'élément de réseau de gestion d'accès et de mobilité de mettre à jour les informations de politique mises à jour au niveau régional par rapport à une zone de service du LADN ;
□ la détermination de la zone de service du LADN en fonction d'une correspondance entre la zone de service du LADN et les informations d'identification du LADN (203) ;
□ le fait de déterminer si un dispositif terminal se trouve dans la zone de service du LADN ;
□ dans le cas où le dispositif terminal se trouve dans la zone de service, l'envoi des informations de politique mises à jour au dispositif terminal dans la zone de service du LADN conformément aux informations d'instructions, mettant ainsi à jour au niveau régional les informations de politique mises à jour (204).

2. Procédé selon la revendication 1, dans lequel, avant l'envoi des informations de politique mises à jour au dispositif terminal, le procédé comprend en outre :
la détermination du fait que le dispositif terminal est dans un état inactif ; et
la mise en cache des informations de politique mises à jour sans envoyer les informations de politique mises à jour au dispositif terminal.

3. Procédé selon l'une quelconque des revendications 1 et 2, dans lequel le procédé comprend en outre :
la détermination du fait que le dispositif terminal est dans un état connecté ; et
l'envoi des informations de politique mises à jour au dispositif terminal dans la zone de service du LADN conformément aux informations d'instruction comprend :
l'envoi des informations de politique mises à jour au dispositif terminal dans l'état connecté conformément aux informations d'instruction.

4. Procédé selon l'une quelconque des revendications 1 à 3, dans lequel les informations de politique mises à jour comprennent en outre des informations d'identification d'une application déployée dans le LADN.

5. Élément de réseau de gestion d'accès et de mobilité configuré pour exécuter l'un quelconque des procédés selon les revendications 1 à 4.

6. Support de stockage lisible par ordinateur, dans lequel le support de stockage lisible par ordinateur stocke une instruction, et lorsque l'instruction est exécutée sur un ordinateur d'un élément de réseau de gestion d'accès et de mobilité, l'ordinateur est en mesure de mettre en œuvre le procédé selon l'une quelconque des revendications 1 à 4.
